Europäisches Patentamt

European Patent Office

Office européen des brevets

(11) Publication number: **0 157 227**
**A2**

(12) **EUROPEAN PATENT APPLICATION**

(21) Application number: **85102703.7**

(22) Date of filing: **09.03.85**

(51) Int. Cl.⁴: **G 01 B 9/02**

(30) Priority: **16.03.84 US 591100**

(43) Date of publication of application: **09.10.85**
**Bulletin 85/41**

(84) Designated Contracting States: **DE FR GB**

(71) Applicant: **Hewlett-Packard Company, Mail Stop 20 B-O 3000 Hanover Street, Palo Alto California 94304 (US)**

(72) Inventor: **Davidson, Robert J., 3799 Elgin Way, Boise Idaho 83704 (US)**

(74) Representative: **Schulte, Knud, Dipl.-Ing., c/o Hewlett-Packard GmbH Europ. Patent- und Lizenzabteilung Postfach 1430 Herrenberger Strasse 130, D-7030 Böblingen (DE)**

(54) **Interferometer.**

(57) An interferometer apparatus is disclosed for determining the spatial relationship of two or more observed points (26, 28) such as the height of a magnetic transducer as it moves over the surface of a spinning recording disc. A light beam having two components of characteristic polarization and frequency is separated with one component being directed upon the two observation points (26, 28) one of which may be on the transducer head and the other may be on the spinning disc. The other component is simultaneously directed upon a reference surface (32). The reflected beams are then combined to produce an optical beat frequency which is subsequently detected electronically and converted to a voltage representative of the phase shift between images of the two points and utilized to provide the display of the distance between the two points.

Fig. 2

March 5, 1985 th

## INTERFEROMETER

The invention relates to an interferometer according to the preamble of claim 1 for detecting and measuring extremely small dimensions or distances.

Heterodyne interferometers are well-known in the art, especially in applications where it is desired to determine the shape, i.e. flatness, of a surface such as of a mirror. The basic principle is to produce a monochromatic light beam and to split the beam into two components, each of a different polarization and frequency. One component is directed to and ultimately reflected from the surface being examined; the other interacts similarly with a reference surface. By bringing the reflected beams together, an interference pattern characteristic of the test surface is produced. It will be understood that the variation from point to point of the interference pattern results from the spatial differences between the two reflecting surfaces. This interference pattern is detected as an optical image having a beat frequency, the phase of which varies in proportion to the variation in optical path length between the test and reference areas of the interferometer. Light from a point in the optical image of the interference pattern is converted into electrical signals and these signals are stored for comparison with signals subsequently derived by repeating the process for additional points on the test area, each such point providing a characteristic phase of the optical beat frequency which will be different for each point if there are deviations in the test area at each point. The phase difference between signals is a measure of the extent of the deviations between the various points and thus is indicative of the shape or topography of the surface.

Typical interferometers of this kind are described in U.S. Patent Nos. 4,188,122 and 4,340,304 issued to N.A. Massie et al. and to N.A. Massie, respectively. In both patents, the ultimately obtained light beams or images from the reflecting surfaces (points) are combined and collapsed into a single plane of polarization so that they optically interfere to produce an interference pattern. This interference pattern is then scanned in a single plane to produce electrical signals representing the deviations of the test surface relative to the reference surface.

In the interferometers of the prior art, the topography of a surface under examination could be determined by examining each point sequentially. This process is permissible since the surface under survey is substantially immobile or, if in motion or undergoing a change, the rate of change is so slow that for all practical purposes there is no noticeable or material change in the surface due to motion or change thereof during the time elapsing between observations. Such a sequential observation technique is acceptable under the "static" circumstances just defined. In a dynamic situation where the surface under examination may be in a state of rapid change, which for the present purpose is defined as being a rate of change between observation points faster than the elapsed time between observations, the observations from point to point cannot be made sequentially. This is the situation where it is desired, for example, to determine the flying height (typically 0,4 micrometer) of a magnetic transducer head as it flies over the surface of the rapidly spinning recording disc. Variations in the flying height occur so rapidly that a sequential observation of a point on the head and of a point on the recording disc would not allow to determine the momentary height of the head over the disc.

Relative to the above-mentioned prior art, it is the object of the invention to provide an interferometer according to the preamble of claim 1 which permits the measurement of distances between objects which are in relative motion.

According to the invention, this object is solved by the characterizing features of claim 1.

According to the present invention, an interferometer initially produces two light beams of the same frequency having their respective polarization vectors in different planes. Each beam is then shifted in frequency so that each has a frequency different from the other. A beam of one polarization and frequency is directed onto a first area, e.g. on an area of a spinning recording disc where a transducer head is positioned. Simultaneously the beam of the other polarization and frequency is directed onto a reference surface. Upon reflection from the respective surfaces, the two beams are next passed through a system of polarizers which allow the beams to interact to produce an optical beat frequency. Two images containing the same beat frequency phase information are then formed on discrete planes where, for example, optical fibre cables are positioned. Each optical fibre cable, one positioned to intercept light from the disc and one to intercept light from the transducer head, thereupon transmits its respectively received light image to a detector system where the light images are respectively converted into electrical signals and the optical beat frequency is detected electronically. A difference in surface profile, e.g. of the spinning disc and the transducer head, such as due to the vertical displacement of the transducer head over the surface of the disc, can be detected as a phase shift of the optical beat frequency. An electrical signal out of the phase detector electronics can then be interpreted as a measure of the height of the transducer head over the disc.

The embodiment according to claim 5 ensures that the interferometer according to the invention can be used for examining extended test areas.

According to claim 6, the different polarizations of the test and the reference component of the beam can be obtained by using customary optical components.

According to claim 8, different areas, for example on a transducer head, are observed so that one can also determine whether the head is in a pitch or roll attitude.

A preferred embodiment of the invention is now described in detail with reference to the following figures:
Figure 1, which shows a block diagram of a preferred embodiment of the invention;

Figure 2, which shows a block diagram of a phase detector circuitry
for use with the interferometer of the invention; and

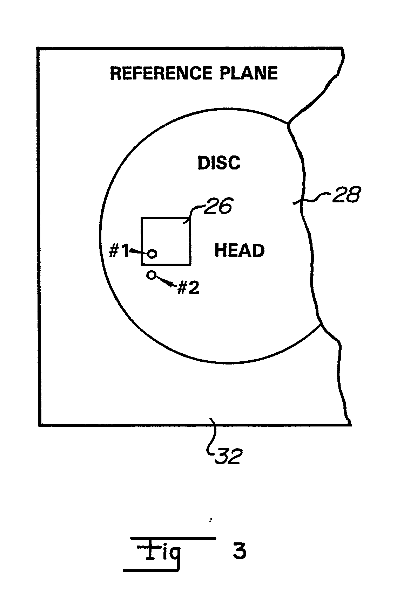

Figure 3, which contains a partial plan view showing the disposition
and relationship of the reference plane, the magentic
recording disc and the transducer head during obvservation
and measurement with the interferometer of the invention.

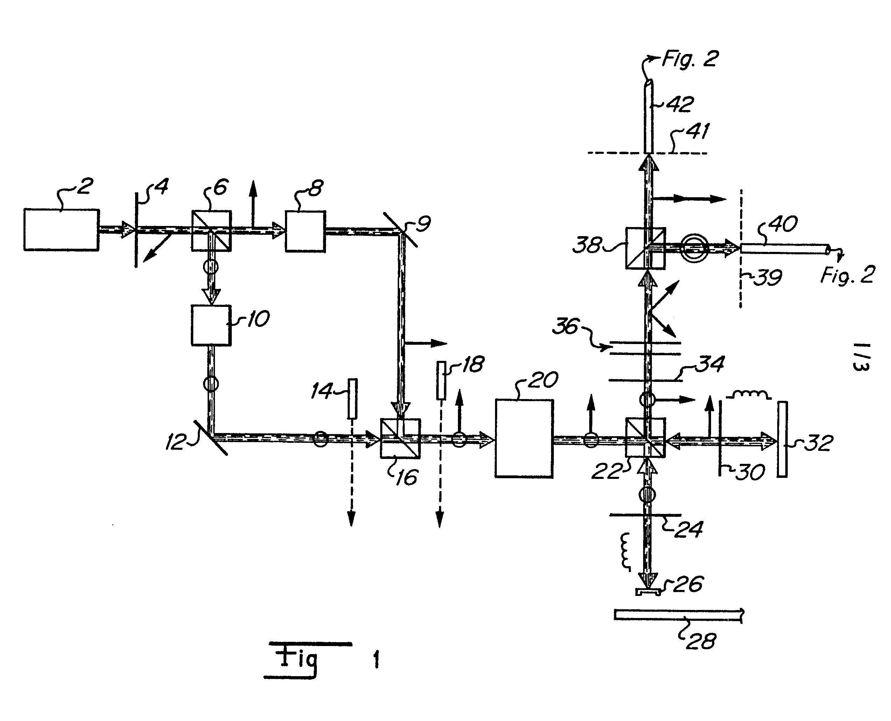

In Figure 1 the heterodyne interferometer in accordance with the invention includes means for producing a composite beam having two components which differ in frequency and polarization. To this end, a
HeNe laser 2 is provided for generating a well-collimated, highly-
monochromatic light beam of a single wavelength of 632.8 nm. This
light beam is first directed to and through a rotatable half-wave
plate 4, which permits the intensity of two segments of the light beam
subsequently formed to be balanced. The initial output beam of the
laser is linearly polarized in an arbitrary plane. In the drawings,
the following symbols are used to designate the various polarization
planes of the light beam(s), it being understood that the reference
plane for these symbols is the plane of the paper on which the drawings appear. A solid arrow indicates the angular direction of the
polarization of the light beam with respect to the axis of the light
beam when this plane is coincident with the plane of the paper. A circle on the light beam indicates that the polarization plane of the
light beam is perpendicular to the plane of the paper. Thus, as shown,
the plane of polarization of the light beam as it emerges from the
half-wave plate 4 is at an angle of 45 degrees. The half-wave plate 4
permits adjustment of the initial plane of polarization of the laser
to some suitable orientation which, as suggested above, may be 45 degrees with respect to the plane of the drawing.

The next step is to separate or split the beam into two segments so
that each segment can be uniquely acted upon to impart to each a distinct polarization and a distinct frequency. Thus, the beam is passed
through a polarization beam splitter 6 which splits the beam into the
two segments shown emerging from the beam splitter 6 in two different
directions in Figure 1. Each segment is still of the same frequency but the polarization of each has been changed from the initial polarization of the unseparated beam. Thus, one beam now has a plane of polarization perpendicular to the plane of the drawings while the other has a plane of polarization still parallel to the plane of the drawings but perpendicular to the axis of propagation of the beam.

Each segment is next shifted in frequency by respective acoustic-optic modulators 8 and 10. Such optical frequency shifters are well known in the art, and their structure and operation will not be described in detail herein. The perpendicularly polarized beam may emerge from the optical frequency shifter 10 with a frequency of $4.75 \times 10^{14}$ Hz + f1 (thus, for example, f1 may be 40 MHz) while the other beam may emerge from the optical frequency shifter 8 with a frequency of $4.75 \times 10^{14}$ Hz + f2 (thus, for example, f2 may be 42 MHz).

The next step is to recombine the two beams and form a composite beam having the aforementioned two components, each of a different polarization and frequency. To bring the two beam segments to the beam combiner 16 it may be necessary, as shown in Figure 1, to bend or turn the respective propagation paths of the two segments 90 degrees by means of, for example, appropriately positioned bending mirrors 9, 12. The beam combiner 16 is substantially identical to the beam splitter 6. Because of the specific orientation of the beam combiner one beam segment is reflected by 90 degrees while the other segment passes through the combiner so that a combination beam emerges therefrom. The combination beam is now comprised of two components, each of different frequency and each distinctly identified by their respective polarizations as well. Because of their different orthogonally-oriented polarizations, the two beam components do not interfere with each other.

Disposed on one of the input sides of the beam combiner 16 is a movable shield 14, which permits interrupting one of the input beams while letting the other pass through the combiner. On the output side of the combiner is a movable half-wave plate 18. As part of the set-up procedure, one of the input beams is blocked by moving the shield 14 into position to do so. Likewise, the half-wave plate 18 is moved into position to permit the rotation of the plane of polarization (of the beam) to the 45 degree orientation. With one of the beams now blocked, the remainder of the system shown operates as a conventional interferometer to permit adjustment of the position of the reference plane 32 to be parallel to the surface of the test area.

Since the combined beam emerging from the beam combiner 16 is of relatively small diameter (i.e. 0,8 millimeter), it is enlarged somewhat in cross section so as to be able to sufficiently encompass or cover the observation points or areas on the objects being examined. It is, therefore, passed through a beam expander 20 where it may be widened to about 15 millimeters in diameter. After expansion the combined beam is ready to be utilized to observe the object or objects under examination.

The beam is thereafter directed into a polarization beam splitter 22 which separates the two beam components according to their respective polarizations. Thus, one beam, hereinafter called the "reference beam", emerges from the splitter 22 and is directed to fall upon a reference plane 32, which may be a highly reflective mirror surface, and the other beam, the "test beam", is directed to fall upon the object(s) 26, and 28 under observation. The object 26 may be a magnetic transducer head or slider which is elevated above the surface of the object 28 which may be a rapidly spinning recording disc. The slider element is designed so that it is caused to rise and "fly" over the surface of the recording disc due to the movement of the air over the disc which results from its spinning. Since the efficiency of the recording or reading of magnetic information on the disc depends to a large extent on the flying height of the slider element over the disc, it is desirable to determine precisely what this flying height is and whether the slider element is in a pitch and/or roll attitude. As will be described more fully hereinafter the difference in the two fringe patterns thus obtained may be used to calculate the spatial distance between the observed point on the transducer head and the observed point on the recording disc.

Interposed between the beam splitter 22 and the test objects 26, 28 and the reference plane 32 are a pair of quarter-wave plates 24, 30, respectively. The purpose of these plates is to produce helical polarization, which after reflection upon the respective surfaces has its helicity inverted and which upon passing through the quarter-wave plate on return converts the original linear polarization into linear polarization perpendicular to the original beam. The reflected beams then travel back through the beam splitter 22, which now acts as a beam combiner, and causes the combined beam to emerge from the beam combiner in a direction substantially at a right angle with respect to the initial direction of entry of the combined beam into the beam splitter 22.This may be explained when it is understood that the helical polarization imparted to the two beams results in shifting the plane polarization of each beam by 90 degrees with respect to the polarization plane of the beams prior to passing through the quarter-wave plates 24 and 30. Without this 90 degree shift in the plane of polarization the two reflected beams would emerge from the beam splitter 22 along the same path at which they entered.

After the combined reflected beams emerge from the beam splitter-combiner 22, they are passed through a half-wave plate 34, which rotates both components by 45 degrees so that when they pass through the polarization beam splitter 38, they will be able to interfere to produce the optical beat pattern described above. However, in order to permit better imaging of the reflections from the test and reference objects, a lens system 36 is provided in the path of the combined reflected beams. Then the combined reflected beams are passed through the beam-splitter 38, which separates the combined beam into two parts which form identical images at image planes 39 and 41.

To complement the illustrated interferometer thus described and to further improve it, the optical images representing the spatial differences of the test points are coupled to electronic circuitry for processing. Two optical fibre cables 40, 42 are positioned so that a fibre cable 40 picks up light from the interference pattern characteristic of the head 26 and the other fibre cable 42 picks up light from the interference pattern characteristic of the adjacent disc. For convenience in the following description, the fibre optic cable 42 and its subsequently associated electronics will be referred to as constituting a first channel denoted "Channel 1" while the other fibre optic cable 40 and its subsequently associated electronics will be referred to as "Channel 2".

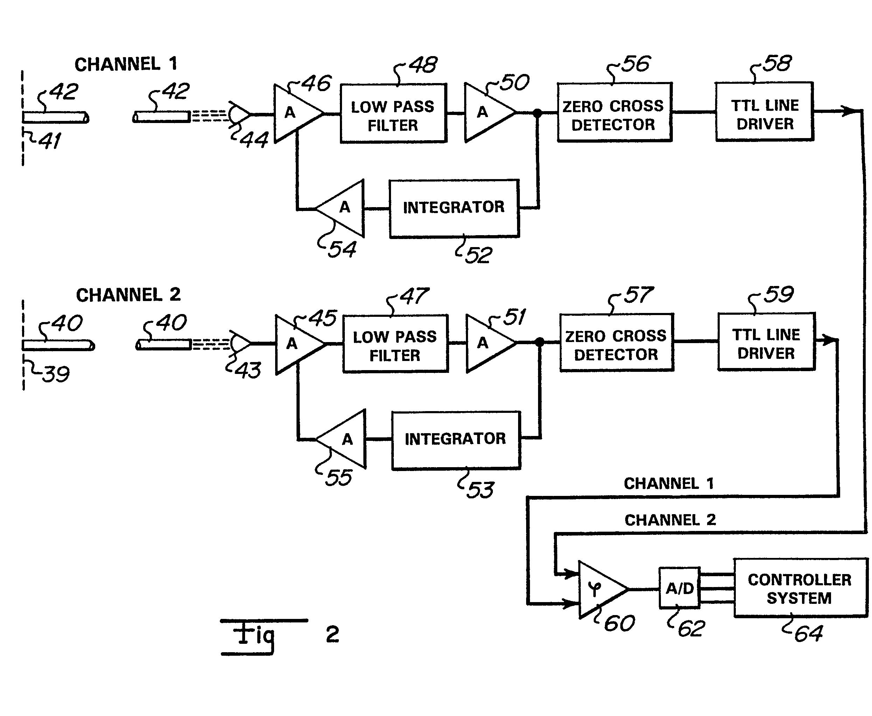

In Figure 2, a phase detection and comparison system whose purpose is to electronically detect the optical beat frequency of the interference patterns characteristic of the beams reflected from the test objects (a transducer head or slider and a recording disc in the present example) is shown. The phase detector/amplifier system will translate the beat frequency of the interference pattern derived from the transducer head and the reference plane to a voltage representing the optical beating between the two images. Similarly a second voltage will be developed by the second channel representing the optical beating between the images from the recording disc and the reference plane. These voltages may then be compared in the phase detector circuit 60, and the phase difference output therefrom can be read as representing the instantaneous relative spacing between the transducer head and the recording disc. These phase differences are derived in parallel by processing the optical images from the test objects in Channel 1 while simultaneously processing the corresponding optical images in Channel 2, for example.

The optical signals in each of the fibre optic cables 40, 42 are first converted into electrical signals by permitting the light from each cable to fall upon respective avalanche photodiode detectors 43, 44 in Channels 1 and 2. Since the two electronic channels are identical in function and operation, only one, viz., Channel 1, will be described in detail herein.

The primary purpose of the two electronic channels when combined with the phase detector is to provide output voltages proportional to the phase difference therebetween which, in turn, is representative of the interference fringe pattern derived by the interferometer. The electrical signals derived from the photodetector 44 are first amplified by an amplifer 46 and then filtered by a low pass filter 48 to reduce the frequency response of the channel to the minimum required by the channel for proper operation. Typically, for example, the low pass filter will block all frequencies except those below 5 MHz. This thus reduces the bandwidth of the channel and improves the signal-to-noise level of the system. The output of the low pass filter 48 is then further amplified by a fixed gain amplifier 50 to supply the additional gain required by the automatic gain control circuit (not separately shown), which is a part of the initial amplifier 46. A rectified sample of the output signal from the fixed gain amplifier 50 is then integrated by an integrator 52 to yield a DC signal proportional to the amplitude of the signal received from the fixed gain amplifier 50. The DC signal is applied to an amplifier 54, which adjusts the level of the output of the integrator 52 to the value necessary to set or adjust the gain of the initial amplifier 46 for constant gain. The sinusoidal output of the fixed gain amplifier 50 is then converted into a square wave signal by a zero cross detector 56 to permit the output of this device to be processed in the succeeding digital phase detector circuitry. The state of the square wave outputs changes when the output of the fixed gain amplifier 50 crosses zero. The square wave signal output of the zero-cross detector 56 is then fed to a TTL line driver 58 which drives the signal bus that carries signals between the photodetector 44 and a phase detector 60. The phase detector 60, which receives the outputs of both Channels 1 and 2, compares the relative phase of the signals from each channel and converts these signals into analog voltages proportional to the phase difference. Thus, this analog voltage will represent the relative spacing between the observed point (point 1) on the transducer head 26 and the observed point (point 2) on the disc 28 while they are in relative motion. The analog voltages representing this phase difference and, consequently, spatial difference, are then converted into digital signals (i.e., "numbers") for processing by the computer or controller system 64. The controller or computer system 64 is programmed to provide an output in display and/or printed form directly indicative of the spatial difference between the transducer head and the moving recording disc.

There thus has been shown and described a novel interferometer which permits the simultaneous examination of more than one point on a surface or surfaces, especially where the surface may be in a state of rapid change such that observations from point to point cannot be made sequentially.

March 5, 1985  th

CLAIMS

1.  An interferometer apparatus comprising:

- means for producing a beam of radiation having two components, each component having a characteristic frequency and polarization;

c h a r a c t e r i z e d   by:

- separating means (22) for receiving the beam of radiation and for directing one of the two components of the beam upon a test area having at least a first (26) and a second (28) test point whose spatial relationship is to be determined and for directing the other component upon a reference surface (32) to derive optical reflections respectively from the test area (26, 28) and from the reference surface (32), and for combining the respective optical reflections into a combined beam;

- means for interacting the optical reflections and for forming two identical images from the combined beam;

- directing means (38) for directing a portion of one of the images containing an image of the first test point (26) into a first optical path (40) and for directing a portion of the other of the images containing an image of the second test point (28) into a second optical path (42);

- converting means disposed in the optical paths for converting the images of the test points (26,28) into corresponding electrical signals; and

- means for deriving from the electrical signals a further signal indicative of the spatial relationship between the first (26) and the second (28) test point.

2.  An interferometer as in claim 1,

c h a r a c t e r i z e d   in that

the means for deriving a signal indicative of the spatial relationship between the first (26) and the second (28) test point are designed for determining the phase difference between the signals corresponding to the images of the first and second test points, respectively.

3. An interferometer as in claim 1 or 2,
   c h a r a c t e r i z e d   in that
   at least two optical fibre members (40,42) are provided for transmitting respective images of the first (26) and of the second (28) test point to the converting means.

4. An interferometer as in claim 3,
   c h a r a c t e r i z e d  in that
   the converting means comprise photodetectors (43,44) coupled to each of the optical fibre members (40,42), respectively.

5. An interferometer as in any of the preceding claims,
   c h a r a c t e r i z e d  by
   means (20) disposed in the beam path for expanding the beam of radiation before impinging on the separating means (22), and focusing means (36) for focusing the optical images, interposed between the means for interacting the optical reflections and the directing means (38).

6. An interferometer as in any of the preceding claims,
   c h a r a c t e r i z e d  in that
   the two components of the beam of radiation impinging on the separating means (22) have a respective plane of polarization orthogonal to each other.

7. An interferometer as in any of the preceding claims,
   c h a r a c t e r i z e d  in that
   the means for interacting the optical reflections comprise a half-wave plate (34).

8.  An interferometer as in any of the preceding claims,
    c h a r a c t e r i z e d  by
    - means for directing one component of the beam of radiation onto
      a plurality of test areas, and
    - means for interacting each of the reflections from the different
      test areas with the reflections from the reference surface (32).

Fig 1

1/3

**CHANNEL 1**

42 | 42 | 46 A | 48 LOW PASS FILTER | 50 A | 56 ZERO CROSS DETECTOR | 58 TTL LINE DRIVER

41 | 44 | 54 A | 52 INTEGRATOR

**CHANNEL 2**

40 | 40 | 45 A | 47 LOW PASS FILTER | 51 A | 57 ZERO CROSS DETECTOR | 59 TTL LINE DRIVER

39 | 43 | 55 A | 53 INTEGRATOR

CHANNEL 1

CHANNEL 2

60 Ψ | 62 A/D | 64 CONTROLLER SYSTEM

Fig 2

0157227

**Fig 3**